# DEMANDE DE BREVET EUROPEEN

(11) **EP 1 739 532 A1**
(43) Date de publication de la demande: **03.01.2007**
(21) Numéro de dépôt: 06291049.2
(22) Date de dépôt: 26.06.2006
(51) Int. Cl.: G06F 3/033

(54) **Procédé et dispositif d'aide à la recherche d'un élément dans une liste par défilement accéléré sur un dispositif d'affichage**

(30) Priorité: 27.06.2005 FR 0506520
(71) Demandeur: Archos, 91430 Igny (FR)
(72) Inventeur: Crohas, Henri, 91370 Verrieres-le-Buisson (FR)
(74) Mandataire: Rosenberg, Muriel Sylvie

(57) **Abrégé**

Ce procédé de défilement d'une liste d'éléments sur un dispositif d'affichage d'un appareil multimédia consiste à rendre le défilement de la liste ou la navigation à l'intérieur d'un contenu multimédia plus rapide (14 ; 18 ; 22 ; 26) par actionnement (12 ; 16 ; 20 ; 24) d'au moins un bouton de l'appareil.

## Description

La présente invention se rapporte à un procédé et à un dispositif d'aide à la recherche d'un élément dans une liste par défilement accéléré sur un dispositif d'affichage.

Les appareils multimédia, portables ou non, comportent généralement des boutons servant à commander leur fonctionnement. L'agencement de commande le plus courant consiste en cinq boutons portant les indications "HAUT" (en anglais "UP"), "BAS" (en anglais "DOWN"), "GAUCHE" (en anglais "LEFT"), "DROITE" (en anglais "RIGHT") et "OK", ainsi que d'autres boutons pouvant varier d'un appareil à l'autre.

Ces cinq boutons sont généralement disposés sous la forme d'une "étoile" de commande à quatre branches formées respectivement par les directions vers le haut, vers le bas, vers la gauche et vers la droite, le bouton "OK" pouvant se trouver, soit au milieu de l'étoile, soit en un emplacement distinct de l'appareil.

Les boutons de l'étoile de commande sont utilisés pour commander une grande variété de fonctions parmi lesquelles on trouve, pour des contenus multimédia :
- la sélection du contenu multimédia (fichiers contenant du texte, de la musique, des vidéos, des photos, etc.) que l'utilisateur souhaite jouer ou afficher ;
- pendant la restitution du contenu, commande du volume en utilisant les boutons "HAUT" et "BAS" ;
- pendant la restitution du contenu, commande de la restitution en utilisant les boutons "GAUCHE" et "DROITE" pour accéder à la piste, à la vidéo ou à la photo précédente ou suivante, ou pour commander la position à l'intérieur de la piste, par exemple avance ou recul rapide, ou sélection de la partie du contenu à visualiser.

Dans les appareils multimédia, la quantité de contenu proposée peut être considérable : il peut y avoir des centaines de vidéos, des milliers de chansons et des dizaines de milliers d'images consultables sur l'appareil. Si l'utilisateur souhaite sélectionner un contenu parmi un large choix de contenus, il est peu pratique de le faire au moyen de l'étoile de commande mentionnée plus haut. En effet, comme le contenu est le plus souvent affiché sous forme d'une liste sur un écran, l'utilisateur est obligé d'appuyer de façon répétée sur les boutons "HAUT" et "BAS" (ou "GAUCHE" et "DROITE", selon l'interface utilisateur de l'appareil) pour voir tout le contenu et pouvoir faire son choix. Cette liste peut se présenter sous la forme de texte ou d'imagettes de photos ou vidéos disposées en rangées ou sous forme de tableau sur l'écran.

On connaît des techniques permettant d'aider l'utilisateur à sélectionner et trouver rapidement le contenu qu'il cherche, comme une action de répétition, qui s'effectue automatiquement lorsque l'utilisateur appuie sur un bouton de commande et le maintient enfoncé. L'appareil parcourt alors automatiquement la liste à une certaine vitesse, de sorte que l'utilisateur n'a pas besoin d'appuyer lui-même de façon répétée sur le bouton. Il est également connu en soi de prévoir que la vitesse de la fonction de répétition augmente en fonction du temps, de façon qu'un contenu situé plus loin dans la liste puisse être atteint en un temps limité, indépendamment du nombre d'éléments dans la liste.

La même opération consistant à appuyer sur un bouton et à le maintenir enfoncé est également utilisée pour naviguer à l'intérieur de pistes de contenu. Afin de distinguer une commande "piste précédente/suivante" d'une commande "recul/avance rapide", il est connu par exemple de prévoir qu'une pression sur les boutons "GAUCHE" ou "DROITE" commandera le passage à la piste de contenu précédente ou suivante, tandis qu'une pression et le maintien enfoncé des mêmes boutons commandera le déplacement à l'intérieur de la piste.

On connaît également d'autres moyens de commande sur les appareils multimédia, tels qu'une molette (en anglais *"thumb wheel")* ou une bande tactile (en anglais *"touch strip*"). En faisant tourner la molette avec le pouce ou l'index, l'utilisateur peut sélectionner des entrées d'une liste ou régler le volume ou d'autres paramètres, suivant le contexte de l'appareil. Une bande tactile permet aussi de sélectionner des entrées par déplacement du doigt vers le haut ou vers le bas le long de sa surface, la vitesse de déplacement du doigt pouvant être utilisée pour déterminer le point d'avancement dans la liste.

Toutes ces techniques de l'art antérieur présentent des inconvénients.

Bien que le fonctionnement et l'utilisation de l'étoile de commande soient très faciles, un problème survient lorsque l'appareil propose une grande quantité de contenus ou lorsque les pistes qui sont exécutées sont elles-mêmes grandes. Les actions de répétition ou d'accélération mentionnées plus haut peuvent améliorer la consultation des contenus mais des problèmes subsistent, comme par exemple :
- une vitesse de répétition fixée aide à trouver un contenu qui est relativement proche de la sélection courante, mais rend plus difficile l'accès à un contenu plus éloigné, car cela prend beaucoup de temps pour y arriver ;
- une répétition accélérée aide à accéder à un contenu plus éloigné, mais à vitesse élevée, l'utilisateur a des difficultés à relâcher le bouton à l'instant précis où il voit le contenu souhaité apparaître sur l'écran, d'où souvent un dépassement (en anglais "*overshoot*") suivi d'un retour en arrière;
- les écrans d'affichage habituellement utilisés dans les appareils multimédia sont de taille relativement réduite et ne peuvent afficher qu'une petite quantité d'éléments de la liste en même temps ; en outre, les écrans sont relativement lents, ce qui signifie que leur rafraîchissement à une cadence élevée lors d'une commande de répétition accélérée peut conduire à un affichage flou qui rend la visualisation du contenu malaisée et ne permet pas à l'utilisateur de relâcher le bouton au bon moment.

L'invention a pour but de remédier aux inconvénients précités.

Dans ce but, la présente invention propose un procédé de défilement d'une liste d'éléments sur un dispositif d'affichage d'un appareil multimédia, remarquable en ce qu'il consiste à rendre le défilement de la liste ou la navigation à l'intérieur d'un contenu multimédia plus rapide par actionnement d'au moins un bouton de l'appareil.

L'invention permet ainsi à l'utilisateur, par une manoeuvre très simple, d'accéder plus rapidement à un contenu dans une liste d'éléments, même longue, défilant sur l'écran d'un appareil multimédia, ou à une partie donnée d'un contenu sur une piste, même si celle-ci est éloignée du début de la piste.

Selon une caractéristique particulière, une pression simple sur un bouton, dit bouton d'accélération, fait avancer ou reculer d'une page l'affichage de la liste, une page représentant le nombre maximum d'éléments de la liste pouvant être affichés simultanément sur le dispositif d'affichage. Cela permet ainsi d'avancer très simplement de page en page.

Selon une caractéristique particulière, une pression sur un bouton d'accélération et son maintien à l'état enfoncé fait avancer ou reculer l'affichage de la liste de façon répétée page par page. Cela évite ainsi à l'utilisateur d'appuyer de façon répétée sur le bouton pour changer de page.

Selon une caractéristique particulière, la cadence de répétition augmente en fonction du temps. L'avancement dans la liste se fait ainsi de façon beaucoup plus rapide, ce qui est particulièrement avantageux lorsque la liste est longue et que le contenu auquel l'utilisateur souhaite accéder se trouve loin dans la liste.

Selon une caractéristique particulière, dans le cas où un nombre p d'éléments de la liste peuvent être affichés simultanément sur le dispositif d'affichage, lors d'une pression sur un bouton d'accélération et de son maintien à l'état enfoncé, la cadence de répétition augmente en fonction du temps et, lorsqu'une vitesse de défilement prédéterminée est atteinte, on n'affiche qu'un élément de la liste tous les p éléments. Cela permet d'éviter que la liste devienne illisible lorsque la cadence de répétition devient trop élevée. Le rafraîchissement de l'affichage apparaît en effet plus lent, ce qui apporte un meilleur confort visuel à l'utilisateur, en plus de la rapidité de parcours de la liste.

Une variante de cette façon de "comprimer" une liste est particulièrement avantageuse si la liste est très longue. Si celle-ci comporte N éléments et si un nombre p d'éléments de la liste peuvent être affichés simultanément sur le dispositif d'affichage, lors d'une pression sur le bouton d'accélération et de son maintien à l'état enfoncé, on affiche sur une première page p éléments distants les uns des autres de N/p éléments, puis on procède par itérations successives jusqu'à ce qu'on accède à l'élément recherché, chaque itération consistant à afficher sur une page p éléments distants de N'/p éléments les uns des autres, N' étant le nombre total d'éléments d'une sous-liste contenant l'élément recherché, constituée des éléments compris entre l'élément courant sélectionné s×(N'/p) et l'élément suivant (s+1)×(N'/p), s étant un entier strictement positif.

Selon une caractéristique particulière, lors de la navigation à l'intérieur d'un contenu, une pression simple sur un bouton d'accélération fait avancer ou reculer d'une certaine durée ou d'une certaine quantité de texte à l'intérieur du contenu. Cela permet d'accélérer très simplement la navigation à l'intérieur d'une piste.

Selon une caractéristique particulière, lors de la navigation à l'intérieur d'un contenu, une pression sur un bouton d'accélération et son maintien à l'état enfoncé fait avancer ou reculer de façon répétée d'une certaine durée ou d'une certaine quantité de texte à l'intérieur du contenu. La navigation à l'intérieur d'une piste est ainsi accélérée sans que l'utilisateur ait besoin d'appuyer de façon répétée sur le bouton d'accélération.

De même que pour le parcours d'une liste, on peut prévoir, pour la navigation à l'intérieur d'une piste, que la cadence de répétition augmente en fonction du temps.

Dans le même but que celui indiqué plus haut, la présente invention propose en outre un dispositif de défilement d'une liste d'éléments sur un dispositif d'affichage d'un appareil multimédia, remarquable en ce qu'il comporte au moins un bouton dont l'actionnement rend le défilement de la liste ou la navigation à l'intérieur d'un contenu multimédia plus rapide.

Les caractéristiques particulières et les avantages du dispositif étant similaires à ceux du procédé, ils ne sont pas répétés ici.

D'autres aspects et avantages de l'invention apparaîtront à la lecture de la description détaillée qui suit de modes particuliers de réalisation, donnés à titre d'exemples non limitatifs. La description se réfère aux dessins qui l'accompagnent, dans lesquels :
- les figures 1A, 1 B et 1C illustrent trois modes particuliers de réalisation d'un agencement à boutons d'accélération susceptible de mettre en oeuvre un procédé de défilement accéléré conforme à la présente invention ; et
- les figures 2A, 2B, 2C et 2D sont des organigrammes illustrant divers cas d'application du procédé de défilement accéléré conforme à la présente invention, dans des modes particuliers de réalisation.

Dans toute la suite, on considère un appareil multimédia muni d'au moins un dispositif d'affichage et dont les commandes sont exécutées par actionnement de boutons, le terme "bouton" s'entendant ici au sens large et incluant des moyens de commande tactiles.

Dans un mode particulier de réalisation, le procédé de défilement accéléré conforme à la présente invention est mis en oeuvre par actionnement de deux boutons supplémentaires, dits boutons d'accélération, prévus en plus de l'étoile de commande classique mentionnée en introduction.

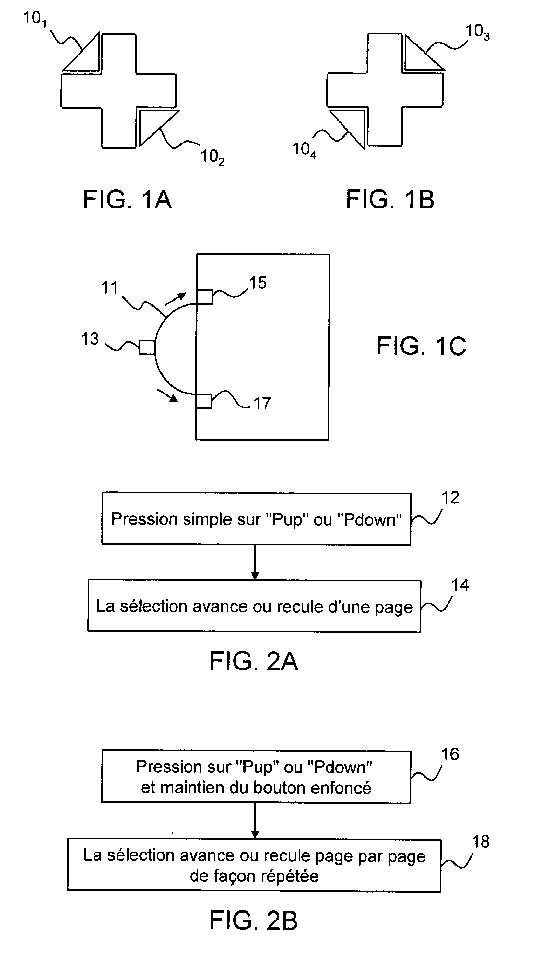

A titre d'exemple nullement limitatif, les boutons d'accélération peuvent être disposés dans les "coins" de l'étoile de commande, en regard l'un de l'autre suivant une diagonale, c'est-à-dire soit en haut à gauche et en bas à droite, comme illustré par les boutons 10₁ et 10₂ sur la **figure 1A,** soit en bas à gauche et en haut à droite, comme illustré par les boutons 10₃ et 10₄ sur la **figure 1 B.**

Il est à noter que la forme de ces boutons choisie pour leur illustration sur ces figures n'est qu'un exemple, donné à titre non limitatif.

D'autre part, on n'a représenté que deux boutons d'accélération. Cependant, on peut en prévoir deux autres dans les coins restés libres de l'étoile de commande. Ainsi, par exemple, on pourra disposer à la fois des fonctions d'accélération pour une sélection du type haut-bas dans une liste et pour une sélection du type avant-arrière (ou gauche-droite) lors de la navigation à l'intérieur d'un contenu multimédia.

En outre, les boutons d'accélération ne sont pas nécessairement des touches distinctes. On peut en effet prévoir une unique étoile de commande susceptible d'être actionnée, non seulement en quatre emplacements correspondant respectivement aux quatre directions "nord, sud, est, ouest", mais également en d'autres emplacements situés suivant deux diagonales ("nord-ouest, sud-est, nord-est, sud-ouest"). Toutes les possibilités d'actionnement sont alors réunies sur un bouton d'un seul tenant.

Par ailleurs, comme mentionné plus haut, les boutons d'accélération ne sont pas limités à la commande d'actions de sélection horizontale ou verticale. Ils peuvent être utilisés pour commander tout aussi bien l'un et l'autre types de sélections, la direction de sélection dépendant du contexte de fonctionnement de l'appareil multimédia considéré. Dans la suite de la description, on désignera ces boutons supplémentaires par "Pup" et "Pdown' lorsqu'ils sont utilisés pour une sélection de type haut-bas et "Pleft" et "Pright" lorsqu'ils sont utilisés pour une sélection de type gauche-droite.

La **figure 1C** illustre un autre mode particulier de réalisation d'un agencement à boutons d'accélération susceptible de mettre en oeuvre un procédé de défilement accéléré conforme à la présente invention, sous la forme d'un mécanisme à molette 11 situé sur un côté du terminal.

La molette comporte trois boutons : un bouton central de sélection 13 et deux boutons 15 et 17, dont l'actionnement déclenche respectivement les fonctions d'accès à la page suivante ("Pup") et à la page précédente ("Pdown") d'une liste et qui permettent un défilement accéléré d'une liste, respectivement dans le sens avant ou arrière, lorsqu'on les maintient enfoncés.

Cette réalisation avec molette n'est bien entendu pas la seule possible et de nombreuses variantes à la portée de l'homme du métier peuvent être envisagées.

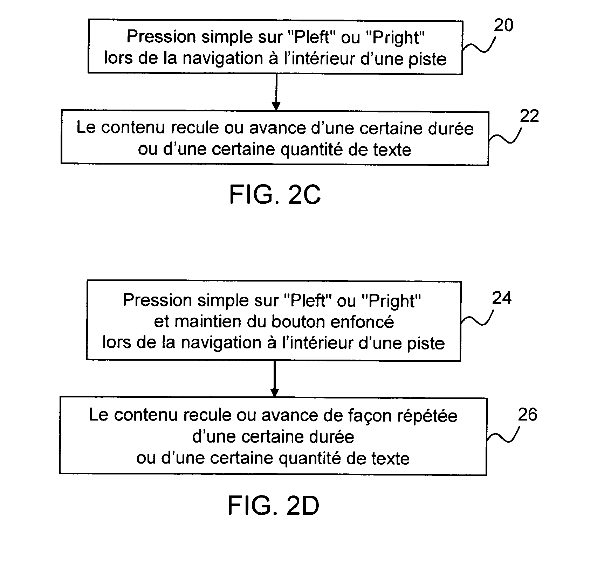

Les boutons d'accélération aident l'utilisateur de diverses façons lors de processus de sélection et de navigation, comme suit :
- lors d'une sélection dans une liste d'éléments, une pression simple sur le bouton "Pup", respectivement sur le bouton "Pdown" (voir étape 12 illustrée sur la **figure 2A)**, fait avancer, respectivement reculer, la sélection d'une page complète, une page étant constituée par le nombre p d'éléments qui peuvent être visualisés simultanément sur l'écran de l'appareil multimédia (étape 14) ;
- lorsque l'utilisateur appuie sur le bouton "Pup", respectivement "Pdown", et maintient ce bouton enfoncé (voir étape 16 illustrée sur la **figure 2B),** l'appareil répète l'opération d'avancement ou de recul d'une page (étape 18), de sorte que la liste se déplace page par page. On peut en outre prévoir d'accélérer la cadence de répétition en fonction du temps, de façon à faciliter l'accès à des contenus plus lointains dans la liste ;
- lorsque l'utilisateur navigue à l'intérieur d'une piste contenant du son ou une vidéo, une pression simple sur le bouton "Pleft", respectivement "Pright" (voir étape 20 sur la **figure 2C**), fait reculer, respectivement avancer, le contenu d'une certaine durée (étape 22), éventuellement prédéterminée, ce qui permet à l'utilisateur de parcourir plus facilement le contenu. Si le contenu est constitué de texte divisé en sections ou en chapitres, on peut par exemple prévoir qu'une pression sur "Pleft", respectivement "Pright", fait reculer, respectivement avancer le texte d'une section ou d'un chapitre ;
- lorsque l'utilisateur navigue à l'intérieur d'une piste, s'il appuie sur le bouton "Pleft", respectivement "Pright" et maintient celui-ci enfoncé (étape 24 illustrée sur la **figure 2D)**, l'appareil répète l'opération d'avancement ou de recul dans le contenu (étape 26). On peut en outre prévoir d'accélérer la cadence de répétition en fonction du temps, de façon à faciliter l'accès à des parties du contenu plus lointaines.

Le procédé de défilement accéléré conforme à la présente invention prévoit en outre une opération de "compression" d'une liste, pour améliorer la lisibilité d'une liste par l'utilisateur pendant le défilement de celle-ci à une vitesse trop élevée pour que l'utilisateur puisse en voir tous les éléments, lorsque l'utilisateur effectue l'étape 16 illustrée sur la figure 2B et que la vitesse de répétition augmente en fonction du temps.

Conformément à la présente invention, à partir d'une vitesse de défilement prédéterminée, l'appareil n'affiche plus tous les éléments de la liste, mais seulement un élément tous les p éléments, p étant un entier prédéterminé. Chaque page (au sens défini plus haut) contenant p éléments, la liste affichée contient seulement un élément de chaque page.

Lorsque l'utilisateur relâche le bouton d'accélération, la compression de la liste cesse et l'utilisateur voit s'afficher l'intégralité de la partie de la liste située autour de l'élément courant sélectionné.

Lors de la transition entre l'état de défilement normal et l'état de défilement avec compression, les éléments de la liste situés avant l'élément courant sélectionné sont affichés normalement, c'est-à-dire un par un sans en omettre ; seuls les éléments de la liste situés après l'élément courant sélectionné sont affichés tous les p éléments. Puis tous les éléments qui ont été affichés un par un sortent du cadre du dispositif d'affichage et l'utilisateur ne voit plus qu'un élément tous les p éléments.

Les éléments inclus dans la partie de liste comprimée peuvent être représentés de façon différente par rapport à ceux de la liste affichée normalement. Par exemple, ils peuvent apparaître dans une couleur ou une police différente ou avec une indentation ou une icône différente, ce qui aide l'utilisateur à remarquer que la liste est passée dans un état de défilement comprimé.

On donne ci-dessous un exemple non limitatif d'un tel cas de figure.
Liste avant compression (taille de la page : p = 5) :
élément n-2
élément n-1
   **élément sélectionné n**
élément n+1
élément n+2
Liste passant à l'état comprimé (déplacement vers le bas) :
élément n-2 (normal)
élément n-1 (normal)
   **élément sélectionné n**
*élément n+p (comprimé)*
*élément n+2p (comprimé)*
Liste déplacée de x pages à l'état comprimé, jusqu'à l'élément m = n+xp :
*élément m-2p*
*élément m-p*
   ***élément sélectionné m***
*élément m+p*
*élément m+2p*
Liste reprenant le cours normal du défilement :
élément m-2
élément m-1
   **élément sélectionné m**
élément m+1
élément m+2

Conformément à la présente invention, une autre technique de compression de liste est possible, qui est particulièrement avantageuse lorsque la liste est très longue.

Cette technique consiste à effectuer la recherche dans la liste de façon itérative, en affichant sur chaque page p éléments distants les uns des autres d'un nombre d'éléments calculé comme suit. Soit N le nombre total d'éléments de la liste. On affiche tout d'abord:
élément 1
élément N/p
élément 2×(N/p)
...
élément N

Puis, si l'élément courant sélectionné est l'élément s×(N/p) de la liste comprimée qui est situé avant l'élément recherché, s étant un entier strictement positif, à la première itération, on applique la compression de façon similaire à l'ensemble d'éléments compris entre l'élément s×(N/p) et l'élément suivant (s+1)×(N/p). On procède ainsi par itérations successives jusqu'à ce qu'on accède à l'élément recherché.

Grâce au défilement de la liste sous forme comprimée, l'utilisateur voit l'affichage se rafraîchir plus lentement et il lui est donc plus facile de se repérer dans la liste, bien que tous les éléments de celle-ci ne soient pas visibles. Par exemple, dans une liste triée par ordre alphabétique, il verra les premières lettres des éléments affichés et sera en mesure de décider à quel moment il doit relâcher le bouton d'accélération pour accéder à un élément qui se trouve dans la partie de l'alphabet actuellement affichée.

Cette option de compression de liste ne s'applique pas seulement à des listes constituées de contenu textuel qui se déplacent dans le sens vertical. Elle peut s'appliquer également par exemple à une liste de photographies disposées de façon horizontale et triées par date de prise. La compression peut dans ce cas consister à n'afficher que les photographies ayant des dates de prise distantes d'une durée prédéterminée, ce qui revient à n'afficher qu'une photo toutes les p photos.

## Revendications

1. Procédé de défilement d'une liste d'éléments sur un dispositif d'affichage d'un appareil multimédia, **caractérisé en ce qu'**il consiste à rendre le défilement de la liste ou la navigation à l'intérieur d'un contenu multimédia plus rapide (14 ; 18 ; 22 ; 26) par actionnement (12 ; 16 ; 20 ; 24) d'au moins un bouton de l'appareil (10₁, 10₂ ; 10₃, 10₄).

2. Procédé selon la revendication 1, **caractérisé en ce qu'**une pression simple (12) sur ledit bouton fait avancer ou reculer (14) d'une page l'affichage de la liste.

3. Procédé selon la revendication 1 ou 2, **caractérisé en ce qu'**une pression sur ledit bouton et son maintien à l'état enfoncé (16) fait avancer ou reculer (18) l'affichage de la liste de façon répétée page par page.

4. Procédé selon la revendication 3, **caractérisé en ce que** la cadence de répétition augmente en fonction du temps.

5. Procédé selon la revendication 4, dans lequel un nombre p d'éléments de la liste peuvent être affichés simultanément sur ledit dispositif d'affichage, ledit procédé étant **caractérisé en ce que**, lors d'une pression sur ledit bouton et de son maintien à l'état enfoncé, la cadence de répétition augmente en fonction du temps et, lorsqu'une vitesse de défilement prédéterminée est atteinte, on n'affiche qu'un élément de la liste tous les p éléments.

6. Procédé selon l'une quelconque des revendications 1 à 4, dans lequel la liste comporte N éléments et un nombre p d'éléments de la liste peuvent être affichés simultanément sur ledit dispositif d'affichage, ledit procédé étant **caractérisé en ce que**, lors d'une pression sur ledit bouton et de son maintien à l'état enfoncé, on affiche sur une première page p éléments distants les uns des autres de N/p éléments, puis on procède par itérations successives jusqu'à ce qu'on accède à l'élément recherché, chaque itération consistant à afficher sur une page p éléments distants de N'/p éléments les uns des autres, N' étant le nombre total d'éléments d'une sous-liste contenant l'élément recherché, constituée des éléments compris entre l'élément courant sélectionné s×(N'/p) et l'élément suivant (s+1)×(N'/p), s étant un entier strictement positif.

7. Procédé selon la revendication 1, **caractérisé en ce que**, lors de la navigation à l'intérieur d'un contenu, une pression simple (20) sur ledit bouton fait avancer ou reculer (22) d'une certaine durée ou d'une certaine quantité de texte à l'intérieur du contenu.

8. Procédé selon la revendication 7, **caractérisé en ce que**, lors de la navigation à l'intérieur d'un contenu, une pression sur ledit bouton et son maintien à l'état enfoncé (24) fait avancer ou reculer (26) de façon répétée d'une certaine durée ou d'une certaine quantité de texte à l'intérieur du contenu.

9. Procédé selon la revendication 8, **caractérisé en ce que** la cadence de répétition augmente en fonction du temps.

10. Dispositif de défilement d'une liste d'éléments sur un dispositif d'affichage d'un appareil multimédia, **caractérisé en ce qu'**il comporte au moins un bouton (10₁, 10₂ ; 10₃, 10₄) dont l'actionnement rend le défilement de la liste ou la navigation à l'intérieur d'un contenu multimédia plus rapide.

11. Dispositif selon la revendication 10, **caractérisé en ce que** ledit bouton est adapté à faire avancer ou reculer (14) d'une page l'affichage de la liste lorsqu'il subit une pression simple (12).

12. Dispositif selon la revendication 10 ou 11, **caractérisé en ce que** ledit bouton est adapté à faire avancer ou reculer (18) l'affichage de la liste de façon répétée page par page lorsqu'il subit une pression et est maintenu à l'état enfoncé (16).

13. Dispositif selon la revendication 12, **caractérisé en ce que** la cadence de répétition augmente en fonction du temps.

14. Dispositif selon la revendication 13, dans lequel un nombre p d'éléments de la liste peuvent être affichés simultanément sur ledit dispositif d'affichage, ledit dispositif étant **caractérisé en ce que**, lors d'une pression sur ledit bouton et de son maintien à l'état enfoncé, la cadence de répétition augmente en fonction du temps et ledit dispositif est adapté à n'afficher qu'un élément de la liste tous les p éléments lorsqu'une vitesse de défilement prédéterminée est atteinte.

15. Dispositif selon l'une quelconque des revendications 10 à 13, dans lequel la liste comporte N éléments et un nombre p d'éléments de la liste peuvent être affichés simultanément sur ledit dispositif d'affichage, ledit dispositif étant **caractérisé en ce que**, lors d'une pression sur ledit bouton et de son maintien à l'état enfoncé, il est adapté à afficher sur une première page p éléments distants les uns des autres de N/p éléments, puis à procéder par itérations successives jusqu'à ce que l'élément recherché soit atteint, chaque itération consistant à afficher sur une page p éléments distants de N'/p éléments les uns des autres, N' étant le nombre total d'éléments d'une sous-liste contenant l'élément recherché, constituée des éléments compris entre l'élément courant sélectionné s×(N'/p) et l'élément suivant (s+1)×(N'/p), s étant un entier strictement positif.

16. Dispositif selon la revendication 10, **caractérisé en ce que** ledit bouton est adapté à faire avancer ou reculer (22) d'une certaine durée ou d'une certaine quantité de texte à l'intérieur du contenu lors de la navigation à l'intérieur d'un contenu, lorsqu'il subit une pression simple (20).

17. Dispositif selon la revendication 16, **caractérisé en ce que** ledit bouton est adapté à faire avancer ou reculer (26) de façon répétée d'une certaine durée ou d'une certaine quantité de texte à l'intérieur du contenu lors de la navigation à l'intérieur d'un contenu lorsqu'il subit une pression et est maintenu enfoncé (24).

18. Dispositif selon la revendication 17, **caractérisé en ce que** la cadence de répétition augmente en fonction du temps.

## Revendications modifiées

### Revendications modifiées conformément à la règle 86(2) CBE.

**1.** Procédé de défilement d'une liste d'éléments sur un dispositif d'affichage d'un appareil multimédia, **caractérisé en ce qu'**il consiste à rendre le défilement de la liste ou la navigation à l'intérieur d'un contenu multimédia plus rapide (14 ; 18 ; 22 ; 26) par actionnement (12 ; 16 ; 20 ; 24) d'au moins un bouton spécifique d'accélération de l'appareil (10₁, 10₂ ; 10₃, 10₄), et **en ce que** lors de la navigation à l'intérieur d'un contenu, une pression simple (20) sur ledit bouton fait avancer ou reculer (22) d'une certaine durée ou d'une certaine quantité de texte à l'intérieur du contenu.

**2.** Procédé selon la revendication 1, **caractérisé en ce qu'**une pression simple (12) sur ledit bouton fait avancer ou reculer (14) d'une page l'affichage de la liste.

**3.** Procédé selon la revendication 1 ou 2, **caractérisé en ce qu'**une pression sur ledit bouton et son maintien à l'état enfoncé (16) fait avancer ou reculer (18) l'affichage de la liste de façon répétée page par page.

**4.** Procédé selon la revendication 3, **caractérisé en ce que** la cadence de répétition augmente en fonction du temps.

**5.** Procédé selon la revendication 4, dans lequel un nombre p d'éléments de la liste peuvent être affichés simultanément sur ledit dispositif d'affichage, ledit procédé étant **caractérisé en ce que**, lors d'une pression sur ledit bouton et de son maintien à l'état enfoncé, la cadence de répétition augmente en fonction du temps et, lorsqu'une vitesse de défilement prédéterminée est atteinte, on n'affiche qu'un élément de la liste tous les p éléments.

**6.** Procédé selon l'une quelconque des revendications 1 à 4, dans lequel la liste comporte N éléments et un nombre p d'éléments de la liste peuvent être affichés simultanément sur ledit dispositif d'affichage, ledit procédé étant **caractérisé en ce que**, lors d'une pression sur ledit bouton et de son maintien à l'état enfoncé, on affiche sur une première page p éléments distants les uns des autres de N/p éléments, puis on procède par itérations successives jusqu'à ce qu'on accède à l'élément recherché, chaque itération consistant à afficher sur une page p éléments distants de N'/p éléments les uns des autres, N' étant le nombre total d'éléments d'une sous-liste contenant l'élément recherché, constituée des éléments compris entre l'élément courant sélectionné s×(N'/p) et l'élément suivant (s+1)×(N'/p), s étant un entier strictement positif.

**7.** Procédé selon la revendication 6, **caractérisé en ce que**, lors de la navigation à l'intérieur d'un contenu, une pression sur ledit bouton et son maintien à l'état enfoncé (24) fait avancer ou reculer (26) de façon répétée d'une certaine durée ou d'une certaine quantité de texte à l'intérieur du contenu.

**8.** Procédé selon la revendication 7, **caractérisé en ce que** la cadence de répétition augmente en fonction du temps.

**9.** Dispositif de défilement d'une liste d'éléments sur un dispositif d'affichage d'un appareil multimédia, **caractérisé en ce qu'**il comporte au moins un bouton (10₁, 10₂ ; 10₃, 10₄) spécifique d'accélération dont l'actionnement rend le défilement de la liste ou la navigation à l'intérieur d'un contenu multimédia plus rapide, et **en ce que** ledit bouton est adapté à faire avancer ou reculer (22) d'une certaine durée ou d'une certaine quantité de texte à l'intérieur du contenu lors de la navigation à l'intérieur d'un contenu, lorsqu'il subit une pression simple (20).

**10.** Dispositif selon la revendication 9, **caractérisé en ce que** ledit bouton est adapté à faire avancer ou reculer (14) d'une page l'affichage de la liste lorsqu'il subit une pression simple (12).

**11.** Dispositif selon la revendication 9ou 10, **caractérisé en ce que** ledit bouton est adapté à faire avancer ou reculer (18) l'affichage de la liste de façon répétée page par page lorsqu'il subit une pression et est maintenu à l'état enfoncé (16).

**12.** Dispositif selon la revendication 11, **caractérisé en ce que** la cadence de répétition augmente en fonction du temps.

**13.** Dispositif selon la revendication 12, dans lequel un nombre p d'éléments de la liste peuvent être affichés simultanément sur ledit dispositif d'affichage, ledit dispositif étant **caractérisé en ce que**, lors d'une pression sur ledit bouton et de son maintien à l'état enfoncé, la cadence de répétition augmente en fonction du temps et ledit dispositif est adapté à n'afficher qu'un élément de la liste tous les p éléments lorsqu'une vitesse de défilement prédéterminée est atteinte.

**14.** Dispositif selon l'une quelconque des revendications 9 à 12, dans lequel la liste comporte N éléments et un nombre p d'éléments de la liste peuvent être affichés simultanément sur ledit dispositif d'affichage, ledit dispositif étant **caractérisé en ce que**, lors d'une pression sur ledit bouton et de son maintien à l'état enfoncé, il est adapté à afficher sur une première page p éléments distants les uns des autres de N/p éléments, puis à procéder par itérations successives jusqu'à ce que l'élément recherché soit atteint, chaque itération consistant à afficher sur une page p éléments distants de N'/p éléments les uns des autres, N' étant le nombre total d'éléments d'une sous-liste contenant l'élément recherché, constituée des éléments compris entre l'élément courant sélectionné s×(N'/p) et l'élément suivant (s+1)×(N'/p), s étant un entier strictement positif.

**15.** Dispositif selon la revendication 14, **caractérisé en ce que** ledit bouton est adapté à faire avancer ou reculer (26) de façon répétée d'une certaine durée ou d'une certaine quantité de texte à l'intérieur du contenu lors de la navigation à l'intérieur d'un contenu lorsqu'il subit une pression et est maintenu enfoncé (24).

**16.** Dispositif selon la revendication 15, **caractérisé en ce que** la cadence de répétition augmente en fonction du temps.
